# Europäisches Patentamt
# European Patent Office
# Office européen des brevets

(19)

(11) Veröffentlichungsnummer : **0 502 226 B1**

(12)

# EUROPÄISCHE PATENTSCHRIFT

(45) Veröffentlichungstag der Patentschrift :
27.09.95 Patentblatt 95/39

(51) Int. Cl.$^6$ : **H02M 7/5387**

(21) Anmeldenummer : **91103414.8**

(22) Anmeldetag : **06.03.91**

(54) **Verfahren und Vorrichtung zur Bildung von Maschinenströmen einer stromrichtergespeisten Drehfeldmaschine.**

(43) Veröffentlichungstag der Anmeldung :
**09.09.92 Patentblatt 92/37**

(45) Bekanntmachung des Hinweises auf die
Patenterteilung :
**27.09.95 Patentblatt 95/39**

(84) Benannte Vertragsstaaten :
**AT CH DE FR GB IT LI**

(56) Entgegenhaltungen :
DE-A- 3 529 591
DE-A- 3 540 182
US-A- 4 520 298

(73) Patentinhaber : **SIEMENS
AKTIENGESELLSCHAFT
Wittelsbacherplatz 2
D-80333 München (DE)**

(72) Erfinder : **Holl, Eugen, Dipl.-Ing. (FH)
Nordring 57
8510 Fürth (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Verfahren und Vorrichtung zur Bildung von Maschinenströmen einer stromrichtergespeisten Drehfeldmaschine

Die Erfindung bezieht sich auf ein Verfahren und eine Vorrichtung zur Bildung von Maschinenströmen einer stromrichtergespeisten Drehfeldmaschine in Abhängigkeit eines gemessenen Zwischenkreisstromes.

Beim Betrieb eines dreiphasigen, pulsbreitenmodulierten Wechselrichters, der eingangsseitig von einem Gleichspannungszwischenkreis versorgt wird und ausgangsseitig eine Drehfeldmaschine speist, ist es zur Erzielung eines hochwertigen Antriebsverhaltens notwendig, die Wechselrichter-Ausgangsströme zu erfassen und sie einer Steuer- und Regeleinrichtung zuzuführen. Zur Erzielung eines hochwertigen Antriebsverhaltens hat sich im oberen Leistungsbereich der feldorientierte Betrieb der Drehfeldmaschine durchgesetzt. Hierfür ist die Erfassung der Maschinenströme in mindestens zwei Phasen notwendig. Bei drehzahlveränderbaren Antrieben kleiner Leistung, beispielsweise kleiner einigen kVA, verzichtet man wegen dem hohen Kostenanteil auf eine derartige Strommessung und betreibt die Drehfeldmaschine spannungsgesteuert.

Diese Spannungssteuerung, d.h., es wird eine Spannungs-Frequenzkennlinie verwendet, wirkt sich wegen des relativ großen Ständerwiderstandes der Maschine, vor allem im unteren Aussteuerbereich negativ auf das Antriebsverhalten aus. Bei Konstantmomentantrieben führt die für das Nennmoment notwendige Spannungsanhebung zu einer Stromüberhöhung im Leerlauffall, wodurch Maschine und Umrichter thermisch überlastet werden können. Außerdem muß diese stationäre Spannungsanhebung vor Ort vom Betreiber des Antriebs durchgeführt werden, wodurch Fehlparametierungen nicht ausgeschlossen werden können. Für eine Überstromerkennung ist bei Umrichtern kleiner Leistung im Zwischenkreis ein Shunt-Widerstand, beispielsweise in der Minusschiene, angeordnet.

Aus der DE 35 40 182 A1 ist ein Verfahren und eine Vorrichtung zur Bildung der Ausgangsströme eines dreiphasigen, pulsgesteuerten Wechselrichters bekannt. Bei diesem Verfahren werden in Abhängigkeit der Schaltbefehle für die Wechselrichterventile und des Phasenwinkels der umlaufenden Ständerspannung die Wechselrichter-Ausgangsströme aus dem gemessenen Zwischenkreisstrom abgeleitet. Dazu ist eine Strom-Nachbildungseinrichtung vorgesehen, die eingangsseitig den dem Wechselrichter zugeführten Zwischenkreisstrom, den Phasenwinkel der umlaufenden Ständerspannung sowie die von einer Steuerund Regeleinrichtung gebildeten Schaltbefehle für die mit den Phasen verbundenen Ventile des Wechselrichters empfängt und die ausgangsseitig die nachgebildeten Wechselrichter-Ausgangsströme an die Steuer- und Regeleinrichtung abgibt. Somit können die Wechselrichter-Ausgangsströme ohne zusätzliche Stromwandler auf der Maschinenseite nachgebildet werden.

Bei kleinen Aussteuerungen ist dieses Verfahren mit einem großen Fehler behaftet, da die Verriegelungszeit der Ansteuerschaltung für die Ventile des Wechselrichters in der Größenordnung der Einschaltzeit der Ventile liegt. Außerdem unterscheiden sich die Einschaltsignale und die wirklichen Wechselrichterausgangssignale, da die Schaltsignale zeitlich beeinflußt werden von den Signallaufzeiten und der Verriegelungszeit.

Der Erfindung liegt nun die Aufgabe zugrunde, ein Verfahren und eine Vorrichtung zur Bildung eines Wirkstromes und von positiven und negativen Maschinenströmen einer stromrichtergespeisten Drehfeldmaschine in Abhängigkeit eines gemessenen Zwischenkreisstromes anzugeben, bei dem die aufgezählten Nachteile nicht auftreten und die Vorrichtung kostengünstig ist.

Diese Aufgabe wird erfindungsgemäß gelöst durch die Merkmale des Anspruchs 1 und bezüglich der Vorrichtung wird diese Aufgabe durch die Merkmale des Anspruchs 7 gelöst.

Dadurch, daß der gemessene Zwischenkreisstrom über die aktiven Zeiten integriert wird, d.h. zu den Zeiten, zu denen ein aktiver Spannungszeiger vom Wechselrichter gestellt wird, erhält man den Mittelwert des Zwischenkreisstromes, wobei die Bewertung mit der Aussteuerung direkt mit den Schaltzuständen des Wechselrichters durchgeführt ist. Da die Aussteuerung des Wechselrichters berücksichtigt wird, entspricht das Integral des Zwischenkreisstromes über die aktiven Zeiten dem Wirkstrom der Drehfeldmaschine.

Bei vorteilhaften Ausführungen dieses Verfahrens wird der Zwischenkreisstrom jeweils nur über die aktiven Zeiten integriert, bei denen entweder nur ein oberes bzw. nur ein unteres Stromrichterventil des Wechselrichters eingeschaltet ist. Dadurch entspricht dann das Integral des Zwischenkreisstromes einem positiven Strom, der aus positiven Phasenströmen zusammengesetzt ist, bzw. einem negativen Strom, der aus negativen Phasenströmen zusammengesetzt ist.

Da beim erfindungsgemäßen Verfahren der gemessene Zwischenkreisstrom immer nur über die aktiven Zeiten integriert wird, ist der Wirkstrom bzw. der positive und/oder negative Strom von der Aussteuerung des Wechselrichters unabhängig.

Bei einem weiteren vorteilhaften Verfahren wird der Wert des Integrals des Zwischenkreisstromes bei Kenntnis der Winkellage des umlaufenden Spannungs-Raumzeigers mit einer auf die Aussteuerung bezogenen aktiven Zeit multipliziert. Dadurch wird die im Mittelwert enthaltene Welligkeit der sechsfachen Grundschwingungsfrequenz kompensiert.

Bei einem weiteren vorteilhaften Verfahren werden aus dem positiven und dem negativen Strom unter Zuhilfenahme der Winkellage des umlaufenden Spannungs-Raumzeigers und unter Berücksichtigung der Sektoren wenigstens zwei kontinuierliche Phasenstromverläufe der Drehfeldmaschine zusammengesetzt. Da der positive Strom bzw. der negative Strom aus den positiven bzw. negativen Phasenströmen der Drehfeldmaschine besteht, müssen nur noch diese Anteile der Phasenströme erkannt und phasenrichtig zusammengesetzt werden.

Bei einer erfindungsgemäßen Vorrichtung wird der gemessene Zwischenkreisstrom einer Abtast-Halte-Glied-Anordnung zugeführt, der wenigstens ein Triggersignal zugeführt ist, wobei dieses Triggersignal mittels einer Einrichtung aus gemessenen Maschinenspannungen generiert ist. Der Pegel dieses Triggersignals ist immer dann high, wenn ein beliebiger aktiver Spannungszeiger gestellt wird.

Wenn man die aktiven Spannungszeiger auch noch in zwei Gruppen einteilt, so erhält man zwei weitere Triggersignale. Der Pegel des einen Triggersignals ist immer dann high, wenn ein aktiver Spannungszeiger gestellt wird, wobei nur ein oberes Ventil des Wechselrichters eingeschalten ist. Der Pegel des anderen weiteren Triggersignals ist genau dann immer high, wenn ein aktiver Spannungszeiger gestellt wird, wobei nur ein unteres Ventil des Wechselrichters eingeschaltet ist.

Dadurch kann der gemessene Zwischenkreisstrom über verschiedene aktive Zeiten integriert werden, wobei diese Zeiten aus den gemessenen Maschinenspannungen generiert werden. Somit kann der Wirkstrom und wenigstens zwei Phasenströme der Drehfeldmaschine nachgebildet werden, ohne zusätzliche Stromwandler zu benötigen.

Somit wird mittels diesem Verfahren und dieser Vorrichtung ein stromorientierter Betrieb der Drehfeldmaschine bis zu kleinsten Frequenzen ermöglicht, insbesondere bis Frequenz Null, ohne die Verwendung zusätzlicher kostenintensiver Stromsensoren zu verwenden.

Zur weiteren Erläuterung der Erfindung wird auf die Zeichnung Bezug genommen, in der ein Ausführungsbeispiel einer Vorrichtung zur Bildung von Maschinenströmen einer stromrichtergespeisten Drehfeldmaschine schematisch veranschaulicht ist.

| | |
|---|---|
| Figur 1 | zeigt eine stromrichtergespeiste Drehstrommaschine mit einem Blockschaltbild der erfindungsgemäßen Vorrichtung, die |
| Figur 2 | veranschaulicht die Raumzeigerdarstellung von Spannung und Strom, die |
| Figur 3 | zeigt eine Tabelle für die Zuordnung des Zwischenkreisstromes zu den Phasenströmen der Drehfeldmaschine zu den aktiven Zeiten, die |
| Figur 4 | zeigt eine grafische Darstellung der sektorabhängigen Bestimmung der Phasenströme aus dem Zwischenkreisstrom, in |
| Figur 5 | ist ein zeitlicher Verlauf des gemessenen Zwischenkreisstromes während einer Abtastperiode in einem Diagramm über der Zeit t dargestellt, in den |
| Figuren 6 bis 9 | sind die zeitlichen Verläufe des gebildeten positiven und negativen Stromes $i_p$ und $i_m$ bei unterschiedlichen Belastungen jeweils in einem Diagramm über der Zeit t dargestellt, die |
| Figur 10 | zeigt das Blockschaltbild einer Abtast-Halte-Glied-Anordnung der Figur 1 und in |
| Figur 11 | ist eine schaltungsmäßige Ausführung dieser Abtast-Halte-Glied-Anordnung dargestellt, die |
| Figur 12 | zeigt eine Schaltungsanordnung einer Einrichtung zur Erzeugung eines Triggersignals, die |
| Figur 13 | zeigt eine Schaltungsanordnung der Einrichtung zur Erzeugung mehrere Triggersignale, die |
| Figur 14 | zeigt eine Schaltungsanordnung zur Bestimmung der Winkellage des umlaufenden Spannungs-Raumzeigers innerhalb eines Sektors, in |
| Figur 15 | ist das Ausgangssignal der Schaltungsanordnung nach Figur 14 in einem Diagramm über der Winkellage dargestellt und in |
| Figur 16 | ist ein Kompensationssignal in einem Diagramm über der Winkellage dargestellt. |

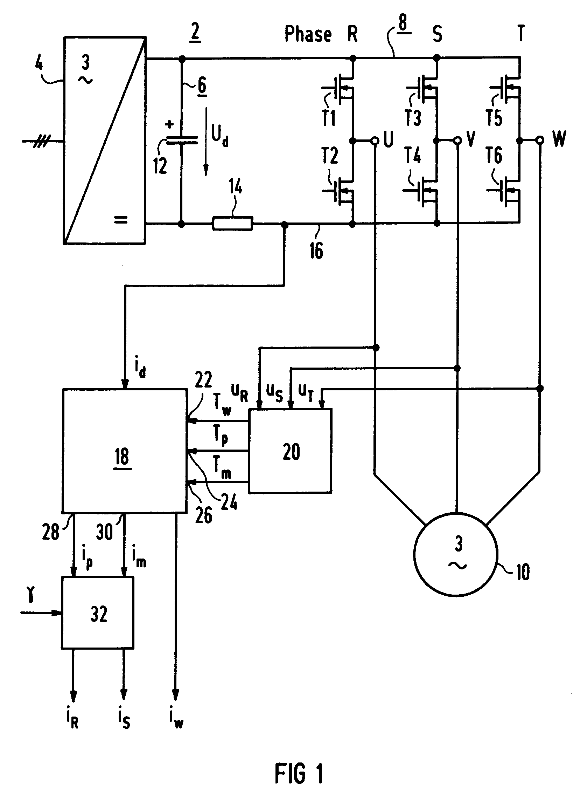

Die Figur 1 zeigt einen Umrichter 2, bestehend aus einem ungesteuerten Gleichrichter 4, einem Spannungszwischenkreis 6 und einem Pulswechselrichter 8. Der Pulswechselrichter 8 speist eine Drehfeldmaschine 10. Der Spannungszwischenkreis 6 enthält einen Stützkondensator 12, an dem die Zwischenkreisspannung $U_d$ anliegt, und einen Shunt-Widerstand 14, der in der Minusschiene 16 angeordnet ist. Der Pulswechselrichter 8 ist als dreiphasige Brückenschaltung (B6-Schaltung) ausgeführt, wobei als Stromrichterventile T1 bis T6 abschaltbare Stromrichterventile vorgesehen sind. In der Figur 1 sind als abschaltbare Stromrichterventile T 1 bis T6 MOSFET-Transistoren vorgesehen. An den Ausgängen der Brückenzweige U, V und W sind die Klemmen der Drehfeldmaschine 10 angeschlossen.

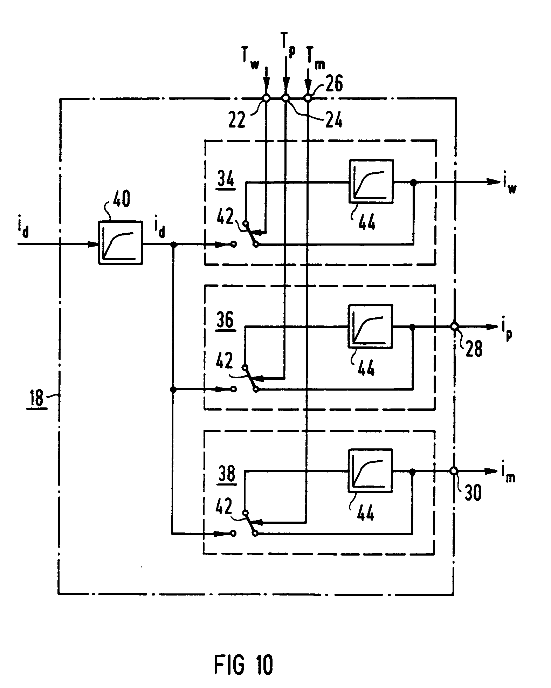

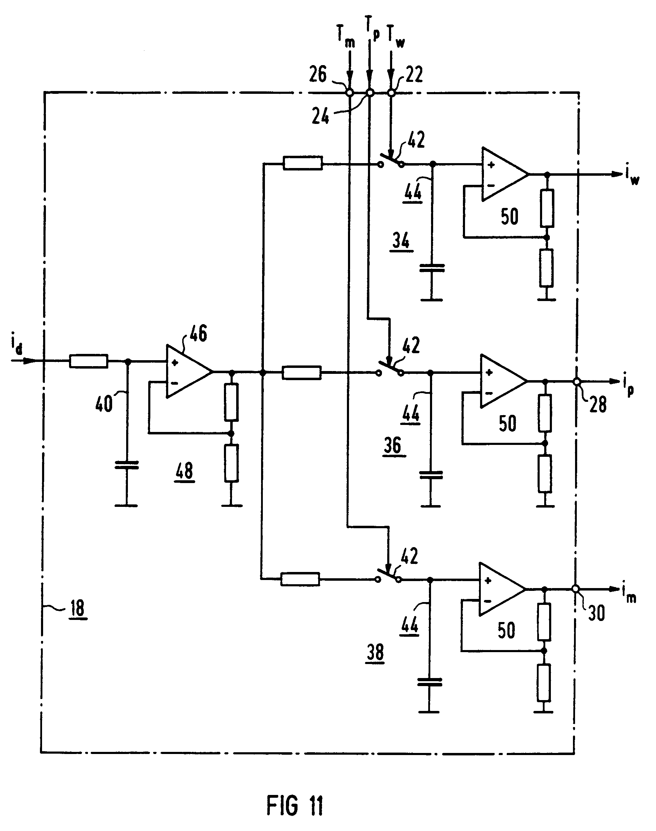

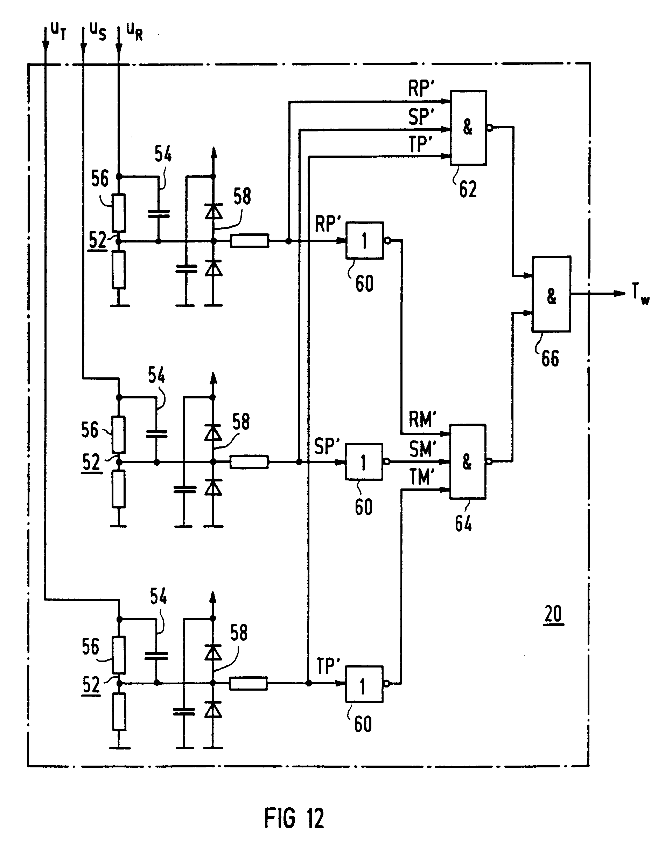

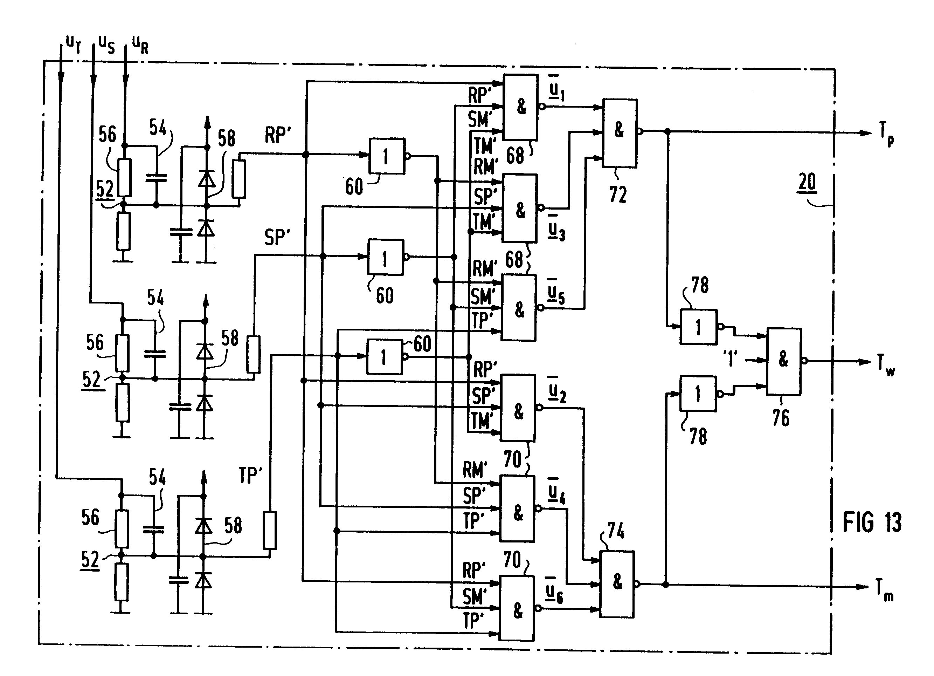

Mittels des Shunt-Widerstandes 14 wird der Zwischenkreisstrom $i_d$ gemessen und einer Abtast-Halte-Glied-Anordnung 18 zugeführt, deren Blockschaltbild in Figur 10 näher dargestellt ist und eine Schaltungsausführung in Figur 11 veranschaulicht ist. Dieser Abtast-Halte-Glied-Anordnung 18 sind drei Triggersignale $T_w$, $T_p$ und $T_m$ zugeführt, die mittels einer Einrichtung 20 aus gemessenen Maschinenspannungen $U_R$, $U_S$ und $U_T$, die eingangs anstehen, generiert werden. Schaltungsausführungen für diese Einrichtung 20 zur Erzeugung von Triggersignalen $T_w$, $T_p$ und $T_m$ sind in den Figuren 12 und 13 dargestellt. Dabei stehen das Triggersignal $T_w$ am ersten Triggereingang 22 und die Triggersignale $T_p$ und $T_m$ am zweiten und dritten Triggereingang 24 und 26 der Abtast-Halte-Glied-Anordnung 18 an. Zwei Ausgänge 28 und 30 dieser Abtast-Halte-Glied-Anordnung 18 sind mit einer Rechenschaltung 32, insbesondere einem Mikrocomputer, verbunden. Ein Frequenzeingang dieser Rechenschaltung 32 ist eine Winkellage $\gamma$ zugeführt, die von einer Steuer- und Regeleinrichtung des Umrichters 2 geliefert wird, wobei aus Übersichtlichkeitsgründen diese Steuer- und Regeleinrichtung nicht näher dargestellt ist. Bei einer vorteilhaften Ausführungsform ist die Steuer- und Regeleinrichtung Bestandteil der Rechenschaltung 32, wodurch die Winkellage $\gamma$ dieser Rechenschaltung 32 nicht mehr zugeführt werden braucht, da sie ihm schon bekannt ist. An den beiden Ausgängen der Rechenschaltung 32 kann der zeitliche Verlauf wenigstens zweier Phasenströme $i_R$ und $i_S$ der Drehfeldmaschine 10 abgegriffen werden. An einem ersten Ausgang der Abtast-Halte-Glied-Anordnung 18 steht ein nachgebildeter Wirkstromwert $i_w$ der Drehfeldmaschine 10 an.

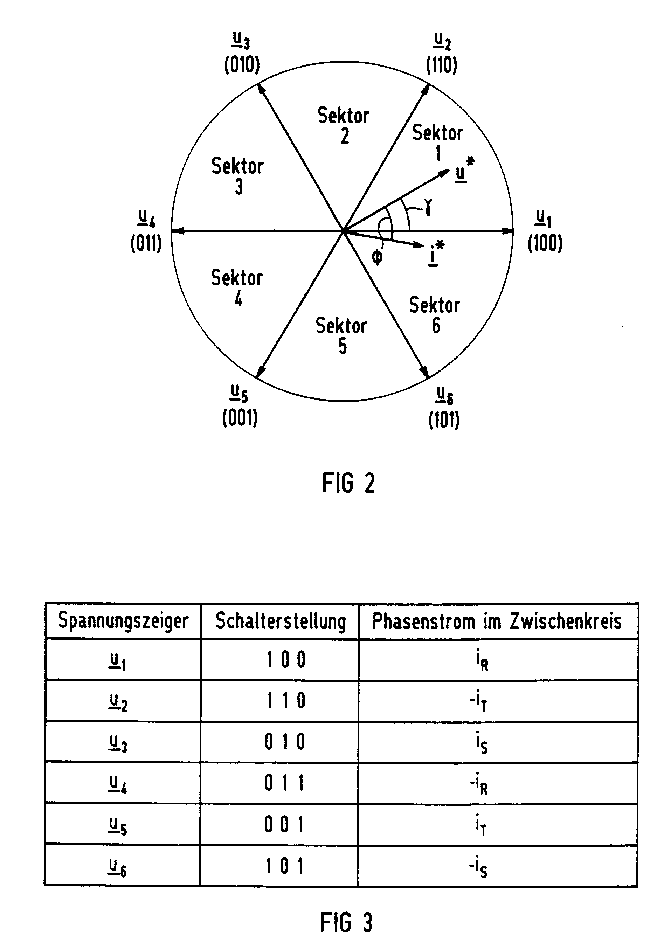

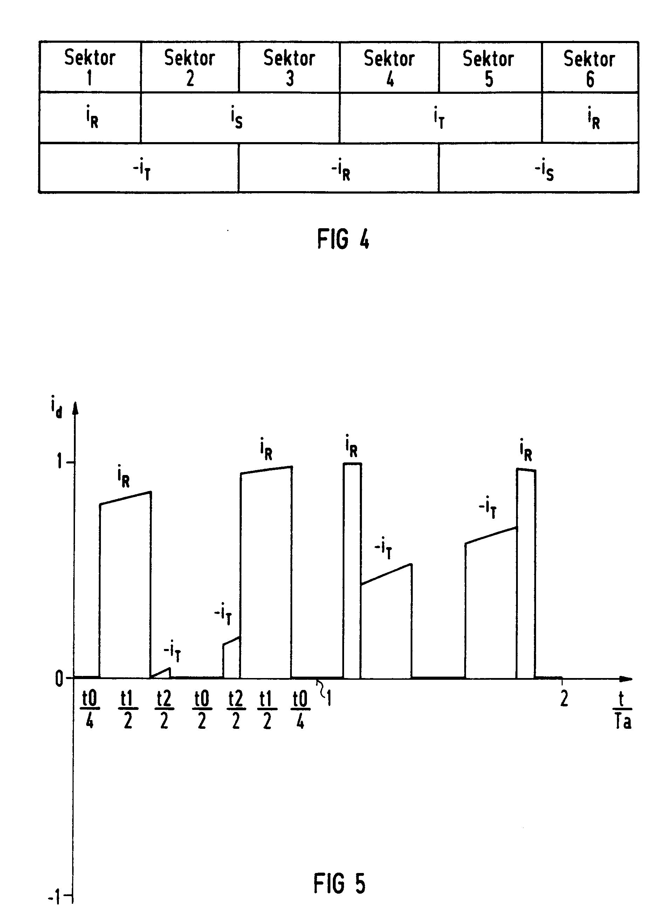

Die Phasengrößen von Spannung und Strom der Drehfeldmaschine 10 lassen sich, wie in Figur 2 dargestellt, mit ihren zugehörigen Raumzeigern $\underline{u}*$ und $\underline{i}*$ darstellen. Sie rotieren mit konstanter Amplitude und der Kreisfrequenz $\omega*$. Zwischen dem Spannungs- und Strom-Raumzeiger $\underline{u}*$ und $\underline{i}*$ stellt sich lastabhängig ein Lastwinkel $\phi$ ein. Beim Pulswechselrichter 8, auch Zweipunktpulswechselrichter genannt, durchlaufen die Raumzeiger $\underline{u}*$ und $\underline{i}*$ sechs Sektoren, die durch die aktiven Spannungszeiger $\underline{u}_1$ bis $\underline{u}_6$ eingegrenzt sind. Man kann jedem der aktiven Spannungszeiger einen definierten Phasenstrom $i_R$, $-i_R$, $i_S$, $-i_S$, $i_T$ und $-i_T$ zuordnen. Z.B. muß während der Einschaltung des Zeigers $\underline{u}_1$ im Spannungszwischenkreis 6 der Strom der Phase R fließen und während der Einschaltung des Zeigers $\underline{u}_2$ fließt der Strom der Phase -T. Dies gilt ohne Einschränkung sowohl für den motorischen als auch für den generatorischen Betrieb der Maschine 10. Für die anderen aktiven Zeiger $\underline{u}_3$ bis $\underline{u}_6$ gelten die Beziehungen nach der Tabelle der Figur 3 und in der Figur 4 sind die Ströme der einzelnen Phasen R, S und T dieser Tabelle in Abhängigkeit der Sektoren 1 bis 6 grafisch dargestellt. Während den Nullspannungszeigern, die mit $\underline{u}_7$ und $\underline{u}_8$ bezeichnet werden, die jedoch wegen der Übersichtlichkeit nicht extra bezeichnet sind, fließen die Maschinenströme als Freilaufstrom in den oberen und unteren Ventilen T1, T3, T5 und T2, T4, T6 des Wechselrichters 8. Sie lassen sich zu diesen Zeitpunkten somit nicht im Zwischenkreisstrom $i_d$ erfassen.

In Figur 5 ist der Zwischenkreisstrom $i_d$ während zweier Abtastperioden Ta für den Sektor 1 beispielhaft in einem Diagramm über der Zeit t/Ta dargestellt. Die Randbedingungen für diese Darstellung sind: Aussteuerung r = 0,6, Grundschwingungsfrequenz f = 30 Hz, Pulsfrequenz $f_p$ = 360 Hz und Leistungsfaktor $\cos\phi$ = 0,77. Ist die Pulsfrequenz $f_p$ des Wechselrichters 8 sehr viel größer als die Grundschwingungsfrequenz f, auch Maschinenfrequenz genannt, so ist die Änderung des Maschinenstromes im Abtastintervall Ta vernachlässigbar gering, d.h. die in Figur 5 dargestellten Stromblöcke besitzen eine konstante Amplitude. Damit folgt für den Mittelwert $\bar{i}_d$ des Zwischenkreisstromes $i_d$ in den aktiven Zeiten t1 und t2 für den Sektor 1:

$$\bar{i}_d \;=\; \frac{t1 \cdot i_R - t2 \cdot i_T}{t1 + t2}.$$

Mit

$t1 = r\,Ta\,\sin(60°-\gamma)$
$t2 = r\,Ta\,\sin(\gamma)$
$i_R = \hat{i}\,\cos(\gamma-\phi)$
$i_T = \hat{i}\,\cos(\gamma+120°-\phi)$

erhält man

$$\bar{i}_d \;=\; \frac{\sqrt{3}\cdot\hat{i}}{2\cdot\sin(60°+\gamma)}\,\cos(\phi) = i_w \qquad \text{für } 0° \leqq \gamma \leqq 60°. \quad (1)$$

Das Integral $i_w$ des Zwischenkreisstromes $i_d$ über die aktiven Zeiten t1 und t2 ist unabhängig von der Aussteuerung r. Durch die winkelabhängige Änderung der Summe der aktiven Zeiten t1 und t2 entsteht jedoch im Mittelwert $i_w$ eine Welligkeit der sechsfachen Grundschwingungsfrequenz f. Diese Welligkeit wird durch die im Nenner stehende Sinusfunktion beschrieben. Für kleine Frequenzen läßt sich diese Welligkeit durch Glättungsglieder mit großen Verzögerungszeiten herausfiltern.

Bei einer vorteilhaften Ausführungsform der Vorrichtung zur Bildung von Maschinenströmen $i_w$, $i_p$ und $i_m$ kann man diese Welligkeit, die durch Modulation hervorgerufen ist, bei Kenntnis der Winkellage $\gamma$ des Spannungs-Raumzeigers $\underline{u}*$ kompensieren. Dazu ist die Rechenschaltung 32 der Figur 1 vorgesehen, der die Winkellage $\gamma$ zugeführt ist. Die Rechenschaltung 32, die vorteilhafterweise ein Mikrocomputer sein kann, ist beispielsweise bei einer besonders kostengünstigen Ausführungsform der Vorrichtung zur Bildung von Maschinenströmen $i_w$, $i_p$ und $i_m$ der Rechner des Steuersatzes der Steuer- und Regeleinrichtung des Antriebs. Dadurch kann die Welligkeit des Integrals $i_w$ des Zwischenkreisstromes $i_d$ durch eine Multiplikation mit der auf die Aussteuerung bezogenen aktiven Zeiten kompensiert werden.

Da bei diesem Verfahren der Mittelwert $\bar{i}_d$ des Zwischenkreisstromes $i_d$ zu den aktiven Zeiten t1 und t2 bestimmt wird, d.h. zu den Zeiten, bei denen im Zwischenkreis 6 auch ein Strom fließt, wird eine Bewertung des Mittelwertes $\bar{i}_d$ mit der Aussteuerung direkt mit den Schaltzuständen des Pulswechselrichters 8 durchgeführt. Dadurch kann man aus dem Mittelwert $\bar{i}_d$ des Zwischenkreisstromes $i_d$ auf den Wirkstrom $i_w$ der Maschine 10 rückschließen. Dieses Verfahren erlaubt eine genügend genaue Wirkstromerfassung bis zu kleinsten Frequenzen f.

Wie in der Tabelle der Figur 3 angegeben, läßt sich der Zwischenkreisstrom $i_d$ zu jeder aktiven Zeit einem bestimmten Phasenstrom zuordnen. Die Figur 4 zeigt, daß jeder aktive Spannungszeiger über 120° getaktet wird, beispielsweise $\underline{u}_1$ im Sektor 1 und 6, $\underline{u}_2$ im Sektor 1 und 2. Folglich ist es auch in diesen 120° möglich, den entsprechenden Phasenstrom $i_R$ für $\underline{u}_1$ und $-i_T$ für $\underline{u}_2$ aus dem Zwischenkreisstrom $i_d$ herauszutakten. Die aktiven Spannungszeiger $\underline{u}_1$ bis $\underline{u}_6$ kann man in zwei Gruppen einteilen. Die eine Gruppe beinhaltet die Spannungszeiger $\underline{u}_1$, $\underline{u}_3$ und $\underline{u}_5$, bei denen nur ein oberes Ventil T1, T3 oder T5 des Pulswechselrichters 8 eingeschaltet ist, wobei in der anderen Gruppe sich die Spannungszeiger $\underline{u}_2$, $\underline{u}_4$ und $\underline{u}_6$ befinden, bei denen nur ein unteres Ventil T2, T4 oder T6 bzw. zwei obere Ventile T1, T3 bzw. T3, T5 bzw. T1, T5 eingeschaltet sind. Nach der Tabelle der Figur 3 fließen während der Spannungszeiger $\underline{u}_1$, $\underline{u}_3$ und $\underline{u}_5$ die positiven Phasenströme $i_R$, $i_S$ und $i_T$, während der Spannungszeiger $\underline{u}_2$, $\underline{u}_4$ und $\underline{u}_6$ die negativen Phasenstrom $-i_T$, $-i_R$ und $-i_S$.

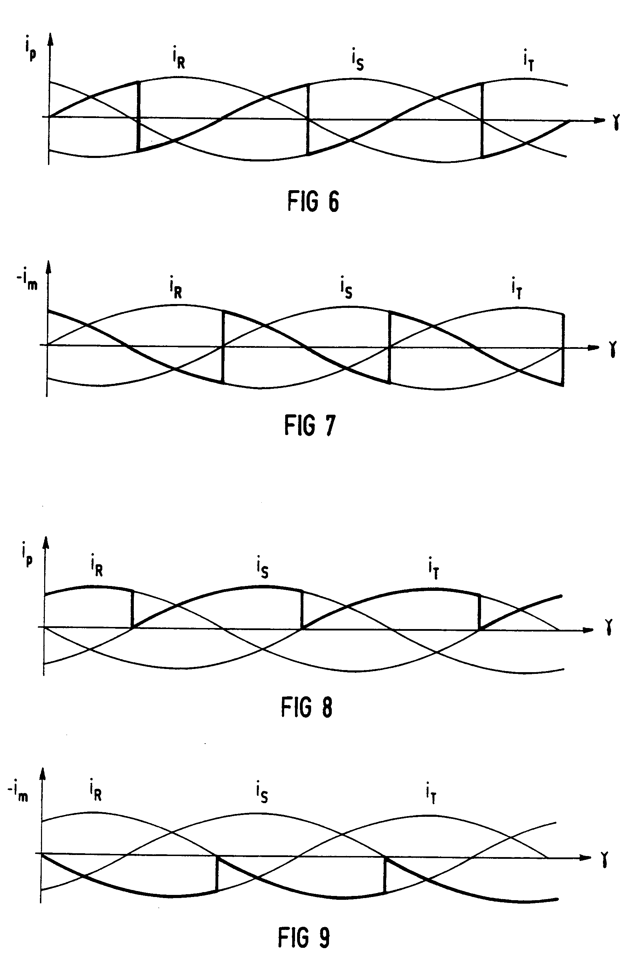

Wird entsprechend der beiden Gruppen von Spannungszeigern $\underline{u}_1$, $\underline{u}_3$, $\underline{u}_5$ und $\underline{u}_2$, $\underline{u}_4$, $\underline{u}_6$ zwei Triggerimpulse $i_p$ und $i_m$ generiert und der Abtast-Halte-Glied-Anordnung 18 zugeführt, so wird der Zwischenkreisstrom $i_d$ über deren aktiven Zeiten integriert. Das Integral $i_p$ bzw. $i_m$ des Zwischenkreisstromes $i_d$ entspricht in 120°-Blöcken den Phasenströmen $i_R$, $i_S$, $i_T$ bzw. $-i_T$, $-i_R$, $-i_S$. Die Zuordnung der Phasenströme zu den gebildeten Maschinenströmen $i_p$ und $i_m$ ist in der Figur 4 dargestellt und der zeitliche Verlauf dieser Ströme $i_p$ und $i_m$ bei verschiedenen Lastzuständen ist jeweils in einem Diagramm über der Zeit t in den Figuren 6 bis 9 veranschaulicht. Diese Darstellungen zeigen, daß abhängig vom Lastzustand ($\cos\phi = 0$ bzw. $\cos\phi = 0{,}866$) der Maschine 10 in der Phasenlage unterschiedliche 120°-Blöcke ermittelt werden. Bei Leerlauf der Maschine 10 ($\cos\phi = 0$) ist der Scheitelwert der Phasenströme nicht in den ermittelten Stromblöcken enthalten. Er läßt sich aber für die dritte Phase aus den beiden gebildeten Maschinenströmen $i_p$ und $i_m$ berechnen. Werden die Ströme $i_p$ und $i_m$, wie in Figur 1 dargestellt, mit einer Rechenschaltung 32 verarbeitet, der die Winkellage $\gamma$ des Spannungs-Raumzeigers $\underline{u}*$ zugeführt ist, so kann aus den gebildeten Maschinenströmen $i_p$ und $i_m$ unter Berücksichtigung der Sektoren wenigstens zwei kontinuierliche Phasenstromverläufe $i_R$ und $i_S$ zusammengesetzt werden.

Aus diesen so gebildeten Phasenströmen $i_R$ und $i_S$ kann die nicht näher dargestellte Steuer- und Regeleinrichtung den Scheitelwert des Strom-Raumzeigers $\underline{i}*$ berechnen. Ist diese Steuer- und Regeleinrichtung in der Lage, auch die feldorientierten Stromkomponenten berechnen zu können, kann die Auswertung des gebildeten Wirkstromes entfallen.

Somit stellt dieses Meßverfahren im gesamten Frequenzbereich der Drehfeldmaschine 10 Meßwerte zur Verfügung, mit denen die bekannten Verfahren der Feldorientierung angewedent werden können, ohne zusätzliche aufwendige Stromerfassungs-Einrichtungen verwenden zu müssen.

In Figur 10 ist ein Blockschaltbild der Abtast-Halte-Glied-Anordnung 18 der Figur 1 näher dargestellt. Diese Anordnung 18 besteht aus drei Abtast-Halte-Gliedern 34, 36 und 38 und einem Eingangsfilter 40. Jedes Abtast-Halte-Glied 34, 36 und 38 besteht jeweils aus einem Schalter 42 und einem Proportionalglied erster Ordnung (PT1-Glied) 44. Die an den Eingängen 22, 24 und 26 anstehenden Triggersignale $T_w$, $T_p$ und $T_m$ steuern jeweils einen Schalter 42. Abtast-Halte-Glieder, auch Sample-and-Hold-bzw. auch Track-and-Hold-Schaltung genannt, sind beispielsweise aus dem Buch "Halbleiter-Schaltungen" von U. Tietze und Ch.Schenk, 1983, Seiten 733 bis 738, bekannt.

In der Figur 11 ist eine Schaltungsanordnung der Abtast-Halte-Glied-Anordnung 18 der Figur 10 dargestellt. Jedes Sample-and-Hold-Glied 34, 36 und 38 besteht in seiner einfachsten Form aus dem Schalter 42 und einem RC-Glied 44. Da die Spannung am Kondensator eines jeden Sample-and-Hold-Gliedes 34, 36 und 38 in 120°-Blöcken dem Grundschwingungsstrom $i*$ der Maschine 10 folgt, sind die dynamischen Anforderungen gering, d.h. die Glättungszeit des RC-Gliedes 44 kann einige 10 µsec. betragen. Lediglich der Operationsverstärker 46 des eingangsseitigen Elektrometerverstärkers 48, der die Spannung am Shunt-Widerstand 14 verstärkt, muß dynamisch schnell sein, damit das Stromistwertsignal gegenüber dem wirklichen Strom nicht sehr verzögert wird. Damit die Abtast-Halte-Glieder 34, 36 und 38 nicht belastet werden, ist jedem Abtast-Halte-Glied 34, 36 und 38 ein Elektrometerverstärker 50 nachgeschaltet. Als Operationsverstärker 46 des eingangsseitigen Elektrometerverstärkers 48 ist ein Operationsverstärker mit einer Slew-Rate in der Größenordnung von 10 V/µS vorzusehen.

In den Figuren 12 und 13 sind Einrichtungen 20 zur Erzeugung von Triggersignalen $T_w$, $T_p$ und $T_m$ näher dargestellt. Wie schon erwähnt, werden die Triggersignale $T_w$, $T_p$ und $T_m$ aus den realen Spannungen $u_R$, $u_S$ und $u_T$ des Pulswechselrichters 8 gebildet. Da die gesamte Signalverarbeitung auf Minuszwischenkreispotential liegt, können die Wechselrichterspannungen $U_R$, $u_S$ und $u_T$ jeweils mit einem Spannungsteiler 52 heruntergeteilt werden. Zur Minimierung der Verlustleistung muß der Spannungsteiler 52 hochohmig ausgeführt sein. Zur Erhöhung der Flankensteilheit ist ein Kondensator 54 elektrisch parallel zum oberen Widerstand 56 des Spannungsteilers 52 geschaltet. Jedem Spannungsteiler 52 ist eine Anpaßschaltung 58 für die folgenden Logikbausteine nachgeschaltet. An den Ausgängen dieser Anpaßschaltungen 58 stehen die Wechselrichterspannungen $u_R$, $u_S$ und $u_T$ als Binärsignale RP', SP' und TP' an. Diese Binärsignale RP' , SP' und TP' werden mittels Inverter 60 in Binärsignale RM', SM' und TM' gewandelt. Die positiven Binärsignale RP', SP' und TP' werden einem NAND-Gatter 62 und die negativen Binärsignalen RM', SM' und TM' werden einem NAND-Gatter 64 zugeführt. Die Ausgänge dieser beiden NAND-Gatter 62 und 64 sind mittels eines UND-Gatters 66 miteinander verknüpft. Die logische Verknüpfung der Binärsignale RP' SP' , TP' , RM' , SM' und TM' der Wechselrichterspannungen $u_R$, $u_S$ und $u_T$ zum Triggersignal $T_w$ ist durch folgende Gleichung beschrieben:

$$T_w = \overline{RP' \cdot SP' \cdot TS'} \cdot \overline{RM' \cdot SM' \cdot TM'}.$$

Die logische Verknüpfung der Binärsignale RP', SP', TP', RM', SM' und TM' der Wechselrichterspannungen $u_R$, $u_S$ und $u_T$ mit den Triggersignalen $T_w$, $T_p$ und $T_m$ werden durch die folgenden Gleichungen:

$$T_p = RP' \cdot SM' \cdot TM' + RM' \cdot SP' \cdot TM' + RM' \cdot SM' \cdot TP'$$
$$T_m = RP' \cdot SP' \cdot TM' + RP' \cdot SM' \cdot TP' + RM' \cdot SP' \cdot TP'$$
$$T_w = T_p + T_m$$

beschrieben. Diese Gleichungen sind in der Figur 13 mittels NAND Gatter 68, 70, 72, 74 und 76 und Invertern 78 in eine Logikschaltung umgesetzt.

Wie bereits erwähnt, entsteht bei der Mittelwertbildung des Zwischenkreisstromes $i_w$ über die aktiven Zeiten eine Welligkeit der sechsfachen Grundschwingungsfrequenz f. Diese Oberschwingung im Wirkstromsignal $i_w$ rührt daher, daß die auf die Aussteuerung r normierte aktive Zeit aufgrund der Raumzeigermodulation nicht konstant ist, sondern sich im 60°-Intervall nach einer Sinusfunktion verändert. Da diese Sinusfunktion den nach Gleichung (1) ermittelten Wirkstrommittelwert im Nenner beeinflußt, muß zur Kompensation das Wirkstromsignal $i_w$ mit dieser Funktion multipliziert werden. Diese Kompensationsfunktion $f_{komp}(\gamma)$ ist durch folgende Gleichung beschrieben:

$$f_{komp}(\gamma) = \sin(60° + \gamma).$$

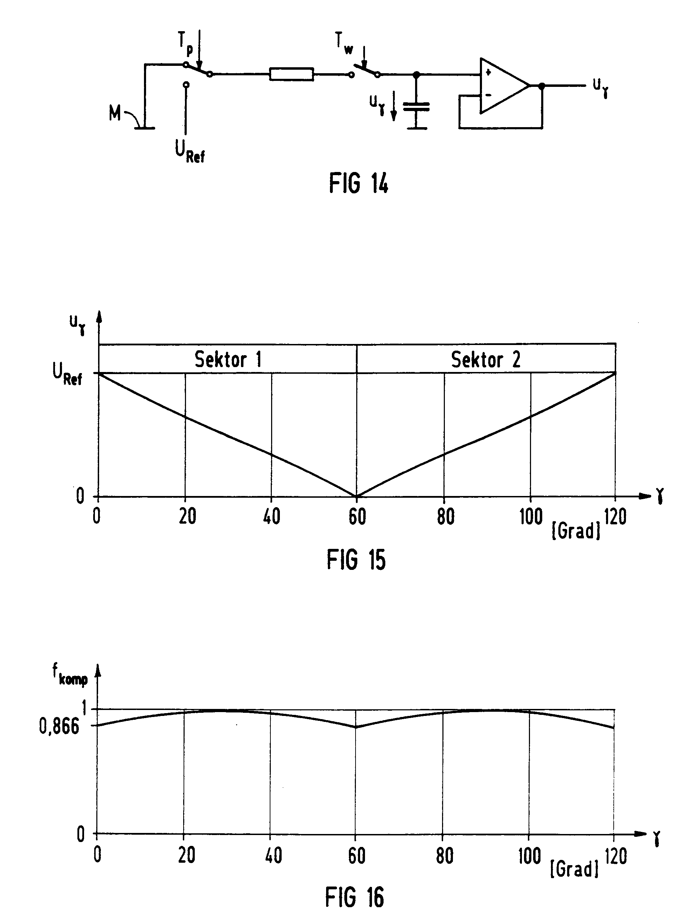

Führt beispielsweise der Rechner des Steuersatzes die Raumzeiger-Modulation selbst aus, so kennt er die Winkellage $\gamma$ des Spannungs-Raumzeigers $\underline{u}*$ und kann die Welligkeit intern kompensieren. Wird die Modulation von einem Hardware-Steuersatz durchgeführt, muß die Winkellage $\gamma$ des Spannungs-Raumzeigers $\underline{u}*$ nachgebildet werden. Da die winkelabhängige Änderung der aktiven Zeit für konstante Aussteuerung r für jeden Sektor identisch ist, muß nur die Lage des Spannungs-Raumzeigers $\underline{u}*$ im Sektor bestimmt werden. Dies kann man mit der in Figur 14 dargestellten Schaltung auf einfache Weise realisieren.

Hierbei wird die winkelabhängige mittlere Einschaltzeit eines Spannungszeigers im Abtastintervall Ta gebildet. Dazu werden die aus den Pulswechselrichter-Ausgangsspannungen $u_R$, $u_S$ und $u_T$ abgeleiteten Triggersignale $T_p$ und $T_w$ herangezogen. Das Triggersignal $T_p$ hat einen high-Pegel, wenn die Spannungszeiger $\underline{u}_1$, $\underline{u}_3$ oder $\underline{u}_5$ eingeschaltet sind, wobei das Triggersignal $T_w$ einen high-Pegel aufweist, wenn irgendein aktiver Spannungszeiger eingeschaltet ist.

Die Spannung $u_\gamma$ am Kondensator ist der Referenzspannung $U_{ref}$ identisch, wenn die Triggersignale $T_p$ und $T_w$ identisch sind. Die Spannung $u_\gamma$ ist Null, wenn das Triggersignal $T_p$ einen low-Pegel aufweist und die aktive Zeit verschieden von Null ist. In beiden Fällen aber muß der Spannungs-Raumzeiger $\underline{u}*$ in seiner Winkellage $\gamma$ genau mit einem aktiven Spannungszeiger übereinstimmen. Für Winkel, die zwischen diesen Grenzwerten liegen, wird die Spannung $u_\gamma$ durch eine Funktion der Form

$$u_\gamma = \frac{\sin(60° - \gamma)}{\sin(60° + \gamma)} \qquad \text{für } 0° \leqq \gamma \leqq 60°$$

beschrieben.

Der winkelabhängige Verlauf der Spannung $u_\gamma$ (Ausgangssignal der Schaltung nach Figur 5) bzw. des Kompensationssignals $f_{komp}$ über 120° ist in der Figur 15 bzw. 16 in einem Diagramm über der Winkellage $\gamma$ dargestellt. Das Kompensationssignal $f_{komp}$ beschreibt die Änderung der auf die Aussteuerung normierten aktiven Zeiten.

Mit diesem Verfahren und dieser Vorrichtung kann man aus einem gemessenen Zwischenkreisstrom $i_d$ unter Verwendung von aus den Wechselrichter-Ausgangsspannungen $u_R$, $u_S$ und $u_T$ generierten Triggersignalen $T_w$, $T_p$ und $T_m$ den Wirkstrom $i_w$ und zwei Stromverläufe $i_p$ und $i_m$ der Drehfeldmaschine 10 nachbilden. Da die Triggerimpulse $T_w$, $T_p$ und $T_m$ aus den Wechselrichter-Ausgangsspannungen $u_R$, $u_S$ und $u_T$ abgeleitet werden, können bis zur kleinsten Aussteuerung r diese Maschinenströme $i_w$, $i_p$ und $i_m$ nachgebildet werden. Da der Wirkstrom durch die Mittelwertbildung des Zwischenkreisstromes $i_d$ während der aktiven Zeiten bestimmt wird, ist das Wirkstromsignal $i_w$ von der Aussteuerung r unabhängig. Den zeitlichen Verlauf wenigstens zweier Phasenströme $i_R$ und $i_S$ der Drehfeldmaschine 10 erhält man, indem die nachgebildeten Maschinenströme $i_p$ und $i_m$ sektorabhängig den Phasen zuordnet, deren Spannungszeiger die entsprechenden Sektoren begrenzen.

**Patentansprüche**

**Patentansprüche für folgende Vertragsstaaten : GB, FR, IT, CH**

1. Verfahren zur Bildung eines Wirkstromes ($i_w$) einer stromrichtergespeisten Drehfeldmaschine (10), wobei ein gemessener Zwischenkreisstrom ($i_d$) über Zeiten (t1,t2), während denen ein aktiver Spannungszeiger ($\underline{u}1,...,\underline{u}6$) mittels einer Kombination von eingeschalteten Stromrichterventilen (T1,...T6) des Pulswechselrichters (8) gestellt ist, integriert wird, wobei diese aktiven Zeiten (t1,t2) aus gemessenen Maschinenspannungen ($u_R,u_S,u_T$) generiert werden.

2. Verfahren zur Bildung eines positiven Maschinenstromes ($i_p$) einer stromrichtergespeisten Drehfeldmaschine (10), wobei ein gemessener Zwischenkreisstrom ($i_d$) über Zeiten, während denen ein aktiver Spannungszeiger ($\underline{u}_1,\underline{u}_3,\underline{u}_5$) mittels einer Kombination (1,0,0; 0,1,0; 0,0,1) von eingeschalteten Stromrichterventilen (T1,...,T6) des Pulswechselrichters (8) gestellt ist, wobei jeweils nur ein oberes Stromrichterventil (T1,T3,T5) einer Kombination von Stromrichterventilen (T1,...T6) eingeschaltet ist, integriert wird, wobei diese Zeiten aus gemessenen Maschinenspannungen ($u_R,u_S,u_T$) generiert werden.

3. Verfahren zur Bildung eines negativen Maschinenstromes ($i_m$) einer stromrichtergespeisten Drehfeldmaschine (10), wobei ein gemessener Zwischenkreisstrom ($i_d$) über Zeiten,während denen ein aktiver Spannungszeiger ($\underline{u}_2,\underline{u}_4,\underline{u}_6$) mittels einer Kombination (1,1,0; 0,1,1; 1,0,1) von eingeschalteten Stromrichterventilen (T1,...,T6) des Pulswechselrichters (8) gestellt ist, wobei jeweils nur zwei Stromrichterventile (T1,T3; T3,T5; T1,T5) einer Kombination von Stromrichterventilen (T1,...,T6) eingeschaltet sind, integriert wird, wobei diese Zeiten aus gemessenen Maschinenspannungen ($u_R,u_S,u_T$) generiert werden.

4. Verfahren nach Anspruch 1, wobei das Integral ($i_w$) des Zwischenkreisstromes ($i_d$) mittels der Gleichung

$$i_w = \frac{\sqrt{3} \cdot \hat{i}}{2 \cdot \sin(60° + \gamma)} \cos(\Phi) \qquad \text{für } 0° \leqq \gamma \leqq 60°$$

ermittelt wird, mit

$\cos(\Phi)$ = Lastfaktor
$\hat{i}$ = Stromamplitude.

5. Verfahren nach Anspruch 1, wobei das Integral ($i_w$) des Zwischenkreisstroms ($i_d$) bei Kenntnis der Winkellage ($\gamma$) des umlaufenden Spannungs-Raumzeigers ($\underline{u}*$) mit einer auf eine Aussteuerung (r) bezogenen aktiven Zeit (t1,t2) multipliziert wird, wobei die Zeiten gemäß folgender Gleichungen

$$t1 = r \cdot Ta \cdot \sin(60° - \gamma)$$
$$t2 = r \cdot Ta \cdot \sin(\gamma)$$

berechnet werden mit

r = Aussteuerung
Ta = Abtastperiode.

6. Verfahren nach Anspruch 2 oder 3, wobei aus dem Integral ($i_p$ oder $i_m$) des Zwischenkreisstroms ($i_d$) bei Kenntnis der Winkellage ($\gamma$) des umlaufenden Spannungs-Raumzeigers ($\underline{u}*$) unter Berücksichtigung der Sektoren (1,...,6) ein kontinuierlicher Phasenstromverlauf ($i_R$ oder $i_S$) der Drehfeldmaschine (10) berechnet wird.

7. Vorrichtung zur Durchführung des Verfahrens nach Anspruch 1, mit einem Shunt-Widerstand (14) in der Minusschiene (16) des Zwischenkreises (6) eines Umrichters (2), bestehend aus einem ungesteuerten Gleichrichter (4) und einem Pulswechselrichter (8), wobei ein mittels Shunt-Widerstand (14) gemessene Zwischenkreisstrom ($i_d$) einer Abtast-Halte-Glied-Anordnung (18) zugeführt ist, wobei an einem ersten Triggereingang (22) ein mittels einer Einrichtung (20) zur Erzeugung von Triggersignalen ($T_w,T_p,T_m$) erzeugtes Triggersignal ($T_w$) ansteht, wobei die Einrichtung (20) aus gemessenen Maschinenspannungen ($u_R,u_S,u_T$) Triggersignale ($T_w, T_p, T_m$) bildet.

8. Vorrichtung zur Durchführung des Verfahrens nach Anspruch 2 mit einem Shunt-Widerstand (14) in der Minusschiene (16) des Zwischenkreises (6) eines Umrichters (2), bestehend aus einem ungesteuerten Gleichrichter (4) und einem Pulswechselrichter (8), wobei ein mittels Shunt-Widerstand (14) gemessener Zwischenkreisstrom ($i_d$) einer Abtast-Halte-Glied-Anordnung (18) zugeführt ist, wobei an einem zweiten Triggereingang (24) ein mittels einer Einrichtung (20) zur Erzeugung von Triggersignalen ($T_w, T_p, T_m$) erzeugtes Triggersignal ($T_p$) ansteht, wobei die Einrichtung (20) aus gemessenen Maschinenspannungen ($u_R, u_S, u_T$) Triggersignale ($T_w, T_p, T_m$) bildet.

9. Vorrichtung zur Durchführung des Verfahrens nach Anspruch 3 mit einem Shunt-Widerstand (14) in der Minusschiene (16) des Zwischenkreises (6) eines Umrichters (2), bestehend aus einem ungesteuerten Gleichrichter (4) und einem Pulswechselrichter (8), wobei ein mittels Shunt-Widerstand (14) gemessener Zwischenkreisstrom ($i_d$) einer Abtast-Halte-Glied-Anordnung (18) zugeführt ist, wobei an einem dritten Triggereingang (26) ein mittels einer Einrichtung (20) zur Erzeugung von Triggersignalen ($T_w, T_p, T_m$) erzeugtes Triggersignal ($T_m$) ansteht, wobei die Einrichtung (20) aus gemessenen Maschinenspannungen ($u_R, u_S, u_T$) Triggersignale ($T_w, T_p, T_m$) bildet.

10. Vorrichtung nach Anspruch 8 oder 9, wobei ein Ausgang der Abtast-Halte-Glied-Anordnung (18), an dem ein positiver oder negativer Stromverlauf ($i_p$ oder $i_m$) ansteht, mit einer Rechenschaltung (32) verbunden ist, die die Winkellage ($\gamma$) des umlaufenden Spannungs-Raumzeigers ($\underline{u}*$) kennt.

**Patentansprüche für folgende Vertragsstaaten : AT, DE**

1. Verfahren zur Bildung eines Wirkstromes ($i_w$) einer stromrichtergespeisten Drehfeldmaschine (10), wobei ein gemessener Zwischenkreisstrom ($i_d$) über Zeiten (t1,t2), während denen ein aktiver Spannungszeiger ($\underline{u}1, ..., \underline{u}6$) mittels einer Kombination von eingeschalteten Stromrichterventilen (T1,...T6) des Pulswechselrichters (8) gestellt ist, integriert wird, wobei diese aktiven Zeiten (t1,t2) aus gemessenen Maschinenspannungen ($u_R, u_S, u_T$) generiert werden und wobei das Integral ($i_w$) des Zwischenkreisstroms ($i_d$) bei Kenntnis der Winkellage ($\gamma$) des umlaufenden Spannungs-Raumzeigers ($\underline{u}*$) mit einer auf eine Aussteuerung (r) bezogenen aktiven Zeit (t1,t2) multipliziert wird, wobei die Zeiten gemäß folgender Gleichungen

$$t1 = r \cdot Ta \cdot \sin(60° - \gamma)$$
$$t2 = r \cdot Ta \cdot \sin(\gamma)$$

berechnet werden mit

r = Aussteuerung

Ta = Abtastperiode.

2. Verfahren zur Bildung eines positiven Maschinenstromes ($i_p$) einer stromrichtergespeisten Drehfeldmaschine (10), wobei ein gemessener Zwischenkreisstrom ($i_d$) über Zeiten, während denen ein aktiver Spannungszeiger ($\underline{u}_1, \underline{u}_3, \underline{u}_5$) mittels einer Kombination (1,0,0; 0,1,0; 0,0,1) von eingeschalteten Stromrichterventilen (T1,...,T6) des Pulswechselrichters (8) gestellt ist, wobei jeweils nur ein oberes Stromrichterventil (T1,T3,T5) einer Kombination von Stromrichterventilen (T1, ...,T6) eingeschaltet ist, integriert wird, wobei diese Zeiten aus gemessenen Maschinenspannungen ($u_R, u_S, u_T$) generiert werden.

3. Verfahren zur Bildung eines negativen Maschinenstromes ($i_m$) einer stromrichtergespeisten Drehfeldmaschine (10), wobei ein gemessener Zwischenkreisstrom ($i_d$) über Zeiten, während denen ein aktiver Spannungszeiger ($\underline{u}_2, \underline{u}_4, \underline{u}_6$) mittels einer Kombination (1,1,0; 0,1,1; 1,0,1) von eingeschalteten Stromrichterventilen (T1,...,T6) des Pulswechselrichters (8) gestellt ist, wobei jeweils nur zwei Stromrichterventile (T1, T3; T3,T5; T1,T5) einer Kombination von Stromrichterventilen (T1,...,T6) eingeschaltet sind, integriert wird, wobei diese Zeiten aus gemessenen Maschinenspannungen ($u_R, u_S, u_T$) generiert werden.

4. Verfahren nach Anspruch 1, wobei das Integral ($i_w$) des Zwischenkreisstromes ($i_d$) mittels der Gleichung

$$i_w = \frac{\sqrt{3} \cdot \hat{i}}{2 \cdot \sin(60° + \gamma)} \cos(\Phi) \qquad \text{für } 0° \leqq \gamma \leqq 60°$$

ermittelt wird, mit

$\cos(\Phi)$ = Lastfaktor

$\hat{i}$ = Stromamplitude.

5. Verfahren nach Anspruch 2 oder 3, wobei aus dem Integral ($i_p$ oder $i_m$) des Zwischenkreisstroms ($i_d$) bei Kenntnis der Winkellage ($\gamma$) des umlaufenden Spannungs-Raumzeigers ($\underline{u}*$) unter Berücksichtigung der Sektoren (1,...,6) ein kontinuierlicher Phasenstromverlauf ($i_R$ oder $i_S$) der Drehfeldmaschine (10) berechnet wird.

6. Vorrichtung zur Durchführung des Verfahrens nach Anspruch 1, mit einem Shunt-Widerstand (14) in der Minusschiene (16) des Zwischenkreises (6) eines Umrichters (2), bestehend aus einem ungesteuerten Gleichrichter (4) und einem Pulswechselrichter (8), wobei ein mittels Shunt-Widerstand (14) gemessene Zwischenkreisstrom ($i_d$) einer Abtast-Halte-Glied-Anordnung (18) zugeführt ist, wobei an einem ersten Triggereingang (22) ein mittels einer Einrichtung (20) zur Erzeugung von Triggersignalen ($T_w,T_p,T_m$) erzeugtes Triggersignal ($T_w$) ansteht, wobei die Einrichtung (20) aus gemessenen Maschinenspannungen ($u_R,u_S,u_T$) Triggersignale ($T_w,T_p, T_m$) bildet und wobei der Ausgang dieser Abtast-Halte-Glied-Anordnung (18) mit einer Rechenschaltung (32) verbunden ist, wobei an einem Frequenzeingang dieser Rechenschaltung (32) eine Winkellage ($\gamma$) eines umlaufenden Spannungs-Raumzeigers ($\underline{u}*$) ansteht.

7. Vorrichtung zur Durchführung des Verfahrens nach Anspruch 2 mit einem Shunt-Widerstand (14) in der Minusschiene (16) des Zwischenkreises (6) eines Umrichters (2), bestehend aus einem ungesteuerten Gleichrichter (4) und einem Pulswechselrichter (8), wobei ein mittels Shunt-Widerstand (14) gemessener Zwischenkreisstrom ($i_d$) einer Abtast-Halte-Glied-Anordnung (18) zugeführt ist, wobei an einem zweiten Triggereingang (24) ein mittels einer Einrichtung (20) zur Erzeugung von Triggersignalen ($T_w,T_p,T_m$) erzeugtes Triggersignal ($T_p$) ansteht, wobei die Einrichtung (20) aus gemessenen Maschinenspannungen ($u_R,u_S,u_T$) Triggersignale ($T_w,T_p,T_m$) bildet.

8. Vorrichtung zur Durchführung des Verfahrens nach Anspruch 3 mit einem Shunt-Widerstand (14) in der Minusschiene (16) des Zwischenkreises (6) eines Umrichters (2), bestehend aus einem ungesteuerten Gleichrichter (4) und einem Pulswechselrichter (8), wobei ein mittels Shunt-Widerstand (14) gemessener Zwischenkreisstrom ($i_d$) einer Abtast-Halte-Glied-Anordnung (18) zugeführt ist, wobei an einem dritten Triggereingang (26) ein mittels einer Einrichtung (20) zur Erzeugung von Triggersignalen ($T_w,T_p,T_m$) erzeugtes Triggersignal ($T_m$) ansteht, wobei die Einrichtung (20) aus gemessenen Maschinenspannungen ($u_R,u_S,u_T$) Triggersignale ($T_w,T_p,T_m$) bildet.

9. Vorrichtung nach Anspruch 7 oder 8, wobei ein Ausgang der Abtast-Halte-Glied-Anordnung (18), an dem ein positiver oder negativer Stromverlauf ($i_p$ oder $i_m$) ansteht, mit einer Rechenschaltung (32) verbunden ist, die die Winkellage ($\gamma$) des umlaufenden Spannungs-Raumzeigers ($\underline{u}*$) kennt.

## Claims

### Claims for the following Contracting States : GB, FR, IT, CH

1. Method for the formation of an active current ($i_w$) of a converter-fed polyphase machine (10), wherein a measured intermediate circuit current ($i_d$) is integrated over times (t1, t2) during which an active voltage vector ($\underline{u}1,...,\underline{u}6$) is set by means of a combination of connected converter valves (T1, ..., T6) of the pulse-controlled inverter (8), wherein these active times (t1, t2) are generated from measured machine voltages ($u_R$, $u_S$, $u_T$).

2. Method for the formation of a positive machine current ($i_p$) of a converter-fed polyphase machine (10), wherein a measured intermediate circuit current ($i_d$) is integrated over times during which an active voltage vector ($\underline{u}_1$, $\underline{u}_3$, $\underline{u}_5$) is set by means of a combination (1,0,0; 0,1,0; 0,0,1) of connected converter valves (T1, ..., T6) of the pulse-controlled inverter (8), wherein only one upper converter valve (T1, T3, T5) of a combination of converter valves (T1, ..., T6) is connected in each case, wherein these times are generated from measured machine voltages ($u_R$, $u_S$, $u_T$).

3. Method for the formation of a negative machine current ($i_m$) of a converter-fed polyphase machine (10), wherein a measured intermediate circuit current ($i_d$) is integrated over times during which an active voltage vector ($\underline{u}_2$, $\underline{u}_4$, $\underline{u}_6$) is set by means of a combination (1,1,0; 0,1,1; 1,0,1) of connected converter valves (T1, ..., T6) of the pulse-controlled inverter (8), wherein only two converter valves (T1, T3; T3, T5; T1, T5) of a combination of converter valves (T1, ..., T6) are connected in each case, wherein these times are generated from measured machine voltages ($u_R$, $u_S$, $u_T$).

4. Method according to claim 1, wherein the integral ($i_w$) of the intermediate circuit current ($i_d$) is determined by means of the following equation:

$$i_w = \frac{\sqrt{3} \cdot \hat{i}}{2 \cdot \sin(60° + \gamma)} \cos(\phi) \qquad for\ 0° \leqq \gamma \leqq 60°$$

with

cos($\phi$)     = load factor
$\hat{i}$          = current amplitude.

5. Method according to claim 1, wherein the integral ($i_w$) of the intermediate circuit current ($i_d$) is multiplied by an active time (t1, t2) relative to a modulation (r), with knowledge of the angular position ($\gamma$) of the current voltage space vector ($\underline{u}*$), wherein the times are calculated according to the following equations:

$$t1 = r \cdot Ta \cdot \sin(60° - \gamma)$$
$$t2 = r \cdot Ta \cdot \sin(\gamma)$$

with

r          = modulation
Ta        = sampling period.

6. Method according to claim 2 or 3, wherein a continuous phase current characteristic ($i_R$ or $i_S$) of the polyphase machine (10) is calculated from the integral ($i_p$ or $i_m$) of the intermediate circuit current ($i_d$), with knowledge of the angular position ($\gamma$) of the current voltage space vector ($\underline{u}*$), taking the sectors (1, ..., 6) into consideration.

7. Apparatus for carrying out the method according to claim 1, having a shunt resistor (14) in the negative bar (16) of the intermediate circuit (6) of a converter (2), consisting of an uncontrolled rectifier (4) and a pulse-controlled inverter (8), wherein an intermediate circuit current ($i_d$) measured by means of a shunt resistor (14) is supplied to a sample-and-hold element arrangement (18), wherein a trigger signal ($T_w$) generated by means of a device (20) for generating trigger signals ($T_w$, $T_p$, $T_m$) is present at a first trigger input (22), wherein the device (20) forms trigger signals ($T_w$, $T_p$, $T_m$) from measured machine voltages ($u_R$, $u_S$, $u_T$).

8. Apparatus for carrying out the method according to claim 2, having a shunt resistor (14) in the negative bar (16) of the intermediate circuit (6) of a converter (2), consisting of an uncontrolled rectifier (4) and a pulse-controlled inverter (8), wherein an intermediate circuit current (id) measured by means of a shunt resistor (14) is supplied to a sample-and-hold element arrangement (18), wherein a trigger signal ($T_p$) generated by means of a device (20) for generating trigger signals ($T_w$, $T_p$, $T_m$) is present at a second trigger input (24), wherein the device (20) forms trigger signals ($T_w$, $T_p$, $T_m$) from measured machine voltages ($u_R$, $u_S$, $u_T$).

9. Apparatus for carrying out the method according to claim 3, having a shunt resistor (14) in the negative bar (16) of the intermediate circuit (6) of a converter (2), consisting of an uncontrolled rectifier (4) and a pulse-controlled inverter (8), wherein an intermediate circuit current ($i_d$) measured by means of a shunt resistor (14) is supplied to a sample-and-hold element arrangement (18), wherein a trigger signal ($T_m$) generated by means of a device (20) for generating trigger signals ($T_w$, $T_p$, $T_m$) is present at a third trigger input (26), wherein the device (20) forms trigger signals ($T_w$, $T_p$, $T_m$) from measured machine voltages ($u_R$, $u_S$, $u_T$).

10. Apparatus according to claim 8 or 9, wherein an output of the sample-and-hold element arrangement (18), at which output a positive or negative current characteristic ($i_p$ or $i_m$) is present, is connected to a computing circuit (32) which knows the angular position ($\gamma$) of the current voltage space vector ($\underline{u}*$).

**Claims for the following Contracting States : AT, DE**

1. Method for the formation of an active current ($i_w$) of a converter-fed polyphase machine (10), wherein a measured intermediate circuit current ($i_d$) is integrated over times (t1, t2) during which an active voltage vector ($\underline{u}_1$, ..., $\underline{u}_6$) is set by means of a combination of connected converter valves (T1, ... T6) of the pulse-controlled inverter (8), wherein these active times (t1, t2) are generated from measured machine voltages ($u_R$, $u_S$, $u_T$), and wherein the integral ($i_w$) of the intermediate circuit current ($i_d$) is multiplied by an active time (T1, t2) relative to a modulation (r), with knowledge of the angular position ($\gamma$) of the current voltage

space vector ($\underline{u}*$), wherein the times are calculated according to the following equations:

$$t1 = r \cdot Ta \cdot \sin(60° - \gamma)$$
$$t2 = r \cdot Ta \cdot \sin(\gamma)$$

with

r = modulation amplitude
Ta = sampling period.

2. Method for the formation of a positive machine current ($i_p$) of a converter-fed polyphase machine (10), wherein a measured intermediate circuit current ($i_d$) is integrated over times during which an active voltage vector ($\underline{u}_1$, $\underline{u}_3$, $\underline{u}_5$) is set by means of a combination (1,0,0; 0,1,0; 0,0,1) of connected converter valves (T1, ..., T6) of the pulse-controlled inverter (8), wherein only one upper converter valve (T1, T3, T5) of a combination of converter valves (T1, ..., T6) is connected in each case, wherein these times are generated from measured machine voltages ($u_R$, $u_S$, $U_T$).

3. Method for the formation of a negative machine current ($i_m$) of a converter-fed polyphase machine (10), wherein a measured intermediate circuit current ($i_d$) is integrated over times during which an active voltage vector ($\underline{u}_2$, $\underline{u}_4$, $\underline{u}_6$) is set by means of a combination (1,1,0; 0,1,1; 1,0,1) of connected converter valves (T1, ..., T6) of the pulse-controlled inverter (8), wherein only two converter valves (T1, T3; T3, T5; T1, T5) of a combination of converter valves (T1, ..., T6) are connected in each case, wherein these times are generated from measured machine voltages ($u_R$, $u_S$, $u_T$).

4. Method according to claim 1, wherein the integral ($i_w$) of the intermediate circuit current ($i_d$) is determined by means of the following equation:

$$i_w = \frac{\sqrt{3} \cdot \hat{i}}{2 \cdot \sin(60° + \gamma)} \cos(\phi) \qquad \text{for } 0° \leqq \gamma \leqq 60°$$

with

$\cos(\phi)$ = load factor
$\hat{i}$ = current amplitude.

5. Method according to claim 2 or 3, wherein a continuous phase current characteristic ($i_R$ or $i_S$) of the polyphase machine (10) is calculated from the integral ($i_p$ or $i_m$) of the intermediate circuit current ($i_d$), with knowledge of the angular position ($\gamma$) of the current voltage space vector ($\underline{u}*$), taking the sectors (1, ..., 6) into consideration.

6. Apparatus for carrying out the method according to claim 1, having a shunt resistor (14) in the negative bar (16) of the intermediate circuit (6) of a converter (2), consisting of an uncontrolled rectifier (4) and a pulse-controlled inverter (8), wherein an intermediate circuit current ($i_d$) measured by means of a shunt resistor (14) is supplied to a sample-and-hold element arrangement (18), wherein a trigger signal ($T_w$) generated by means of a device (20) for generating trigger signals ($T_w$, $T_p$, $T_m$) is present at a first trigger input (22), wherein the device (20) forms trigger signals ($T_w$, $T_p$, $T_m$) from measured machine voltages ($u_R$, $u_S$, $u_T$), and wherein the output of this sample-and-hold element arrangement (18) is connected to a computing circuit (32), wherein an angular position ($\gamma$) of a current voltage space vector ($\underline{u}*$) is present at a frequency input of this computing circuit (32).

7. Apparatus for carrying out the method according to claim 2, having a shunt resistor (14) in the negative bar (16) of the intermediate circuit (6) of a converter (2), consisting of an uncontrolled rectifier (4) and a pulse-controlled inverter (8), wherein an intermediate circuit current ($i_d$) measured by means of a shunt resistor (14) is supplied to a sample-and-hold element arrangement (18), wherein a trigger signal ($T_p$) generated by means of a device (20) for generating trigger signals ($T_w$, $T_p$, $T_m$) is present at a second trigger input (24), wherein the device (20) forms trigger signals ($T_w$, $T_p$, $T_m$) from measured machine voltages ($u_R$, $u_S$, $u_T$).

8. Apparatus for carrying out the method according to claim 3, having a shunt resistor (14) in the negative bar (16) of the intermediate circuit (6) of a converter (2), consisting of an uncontrolled rectifier (4) and a pulse-controlled inverter (8), wherein an intermediate circuit current ($i_d$) measured by means of a shunt resistor (14) is supplied to a sample-and-hold element arrangement (18), wherein a trigger signal ($T_m$) generated by means of a device (20) for generating trigger signals ($T_w$, $T_p$, $T_m$) is present at a third trigger input (26), wherein the device (20) forms trigger signals ($T_w$, $T_p$, $T_m$) from measured machine voltages ($u_R$,

$u_S$, $u_T$).

9. Apparatus according to claim 7 or 8, wherein an output of the sample-and-hold element arrangement (18), at which output a positive or negative current characteristic ($i_p$ or $i_m$) is present, is connected to a computing circuit (32) which knows the angular position ($\gamma$) of the current voltage space vector ($\underline{u}*$).2

**Revendications**

**Revendications pour les Etats contractants suivants : GB, FR, IT, CH**

1. Procédé de formation d'un courant actif ($i_w$) d'une machine à champ tournant (10) alimentée par un convertisseur, selon lequel on intègre un courant mesuré ($i_d$) de circuit intermédiaire pendant des temps (t1,t2), pendant lesquels un vecteur de tension actif ($\underline{u}1,...,\underline{u}6$) est réglé au moyen d'une combinaison de valves conductrices (T1...T6) du convertisseur de l'onduleur à impulsions (8), ces intervalles de temps actifs (t1,t2) étant produits à partir de tensions mesurées ($u_R,u_S,u_T$) de la machine.

2. Procédé de formation d'un courant positif ($i_p$) d'une machine à champ tournant (10) alimentée par un convertisseur, selon lequel on intègre un courant mesuré ($i_d$) de circuit intermédiaire pendant des temps, pendant lesquels un vecteur actif de tension ($\underline{u}_1, \underline{u}_3, \underline{u}_5$) est réglé au moyen d'une combinaison (1,0,0; 0,1,0; 0,0,1) de valves conductrices (T1,...,T6) du convertisseur de l'onduleur à impulsions (8), seule une valve supérieure (T1,T3,T5) d'une combinaison de valves (T1...T6) du convertisseur étant conductrice, ces temps étant produits à partir de tensions mesurées ($u_R,u_S,u_T$) de la machine.

3. Procédé de formation d'un courant négatif ($i_m$) d'une machine à champ tournant (10) alimentée par un convertisseur, selon lequel on intègre un courant mesuré ($i_d$) de circuit intermédiaire pendant des temps, pendant lesquels un vecteur de tension actif ($\underline{u}_2, \underline{u}_4, \underline{u}_6$) est réglé au moyen d'une combinaison (1,1,0; 0,1,1; 1,0,1) de valves conductrices (T1,...,T6) du convertisseur de l'onduleur à impulsions (8), seules deux valves (T1,T3; T3,T5; T1,T5) d'une combinaison de valves (T1,...,T6) du convertisseur étant conductrices, ces temps étant produits à partir de tensions mesurées ($u_R,u_S,u_T$) de la machine.

4. Procédé suivant la revendication 1, selon lequel on détermine l'intégrale ($i_w$) du courant ($i_d$) du circuit intermédiaire au moyen de la relation

$$i_w = \frac{\sqrt{3} \cdot \hat{i}}{2.\sin(60° + \gamma)} \cos(\Phi) \text{ pour } 0° \leqq \gamma \leqq 60°$$

avec
$\cos(\Phi)$ = facteur de charge
$\hat{i}$ = amplitude du courant.

5. Procédé suivant la revendication 1, selon lequel lorsque l'on connaît de la position angulaire ($\gamma$) du vecteur spatial de tension tournant ($\underline{u}*$), l'intégrale ($i_w$) du courant ($i_d$) du circuit intermédiaire est multipliée par un temps actif (t1,t2), rapporté à une modulation (r), les temps étant calculés conformément aux relations suivantes :

$$t1 = r . Ta . \sin(60° - \gamma)$$
$$t2 = r . Ta . \sin(\gamma)$$

avec
r = modulation
Ta = période d'échantillonnage.

6. Procédé suivant la revendication 2 ou 3, selon lequel, lorsque l'on connaît la position angulaire ($\gamma$) du vecteur spatial de tension tournant ($\underline{u}*$) et en tenant compte des secteurs (1,...,6), on calcule une courbe continue ($i_R$ ou $i_S$) du courant de phase de la machine à champ tournant (10) à partir de l'intégrale ($i_p$ ou $i_m$) du courant ($i_d$) du circuit intermédiaire.

7. Dispositif pour la mise en oeuvre du procédé suivant la revendication 1, comportant une résistance shunt (14) dans le rail moins (16) du circuit intermédiaire (6) d'un convertisseur (2), constitué d'un redresseur non commandé (4) et d'un onduleur à impulsions (8), et dans lequel un courant ($i_d$) du circuit intermédiaire, qui est mesuré au moyen de la résistance shunt (14), est envoyé à un circuit d'échantillonnage et de blocage (18), un signal de déclenchement ($T_w$), qui est produit au moyen d'un dispositif (20) servant à produire des signaux de déclenchement ($T_w$, $T_p$, $T_m$), étant appliqué à une première entrée de déclenchement (22), et le dispositif (20) formant des signaux de déclenchement ($T_w$, $T_p$, $T_m$) à partir de tensions mesurées ($u_R$, $u_S$, $u_T$) de la machine.

8. Dispositif pour la mise en oeuvre du procédé suivant la revendication 2, comportant une résistance (14) shunt située dans le rail moins (16) du circuit intermédiaire (6) d'un convertisseur (2), constitué d'un redresseur non commandé (4) et d'un onduleur à impulsions (8), et dans lequel un courant ($i_d$) du circuit intermédiaire, mesuré au moyen de la résistance shunt (14), est envoyé à un circuit d'échantillonnage et de blocage (18), un signal de déclenchement ($T_p$) produit au moyen d'un dispositif (20) servant à produire des signaux de déclenchement ($T_w$, $T_p$, $T_m$) étant appliqué à une seconde entrée de déclenchement (24), et le dispositif (20) formant des signaux de déclenchement ($T_w$, $T_p$, $T_m$) à partir de tensions mesurées ($u_R$, $u_S$, $u_T$) de la machine.

9. Dispositif pour la mise en oeuvre du procédé suivant la revendication 3 comportant une résistance shunt (14) située dans le rail moins (16) du circuit intermédiaire (6) d'un convertisseur (2), constitué d'un redresseur non commandé (4) et d'un onduleur à impulsions (8), et dans lequel un courant ($i_d$) du circuit intermédiaire, mesuré au moyen de la résistance shunt (14), est envoyé à un circuit d'échantillonnage et de blocage (18), un signal de déclenchement ($T_m$) produit au moyen d'un dispositif (20) servant à produire des signaux de déclenchement ($T_w$, $T_p$, $T_m$) étant appliqué à une troisième entrée de déclenchement (26), et le dispositif (20) formant des signaux de déclenchement ($T_w$, $T_p$, $T_m$) à partir de tensions mesurées ($u_R$, $u_S$, $u_T$) de la machine.

10. Dispositif suivant les revendications 8 ou 9, dans lequel une sortie du circuit d'échantillonnage et de blocage (18), sur laquelle apparaît une courbe positive ou négative de courant ($i_p$ ou $i_m$), est reliée à un circuit de calcul (32), qui caractérise la position angulaire (g) du vecteur spatial de tension tournant ($\underline{u}*$).

**Revendications pour les Etats contractants suivants : AT, DE**

1. Procédé de formation d'un courant actif ($i_w$) d'une machine à champ tournant (10) alimentée par un convertisseur, selon lequel on intègre un courant mesuré ($i_d$) de circuit intermédiaire pendant des temps (t1,t2), pendant lesquels un vecteur de tension actif ($\underline{u}1,...,\underline{u}6$) est réglé au moyen d'une combinaison de valves conductrices (T1...T6) du convertisseur de l'onduleur à impulsions (8), ces intervalles de temps actifs (t1,t2) étant produits à partir de tensions mesurées ($u_R$, $u_S$,$u_T$) de la machine, l'intégrale ($i_w$) du courant ($i_d$) du circuit intermédiaire étant multipliée par un temps actif (t1,t2), rapporté à une modulation (r), lorsqu'on connaît la position angulaire ($\gamma$) du vecteur spatial de tension tournant ($\underline{u}*$), les temps étant calculés suivant les relations suivantes :

$$t1 = r \cdot Ta \sin (60° - \gamma)$$
$$t2 = r \cdot Ta \sin(\gamma)$$

avec

r = modulation

Ta = Période d'échantillonnage

2. Procédé de formation d'un courant positif ($i_p$) d'une machine à champ tournant (10) alimentée par un convertisseur, selon lequel on intègre un courant mesuré ($i_d$) de circuit intermédiaire pendant des temps, pendant lesquels un vecteur actif de tension ($\underline{u}_1$, $\underline{u}_3,\underline{u}_5$) est réglé au moyen d'une combinaison (1,0,0; 0,1,0; 0,0,1) de valves conductrices (T1,...,T6) du convertisseur de l'onduleur à impulsions (8), seule une valve supérieure (T1,T3,T5) d'une combinaison de valves (T1...T6) du convertisseur étant conductrice, ces temps étant produits à partir de tensions mesurées ($u_R$,$u_S$,$u_T$) de la machine.

3. Procédé de formation d'un courant négatif ($i_m$) d'une machine à champ tournant (10) alimentée par un convertisseur, selon lequel on intègre un courant mesuré ($i_d$) de circuit intermédiaire pendant des temps, pendant lesquels un vecteur de tension actif ($\underline{u}_2$, $\underline{u}_4$ , $\underline{u}_6$) est réglé au moyen d'une combinaison (1,1,0; 0,1,1; 1,0,1) de valves conductrices (T1,...,T6) du convertisseur de l'onduleur à impulsions (8), seules deux valves (T1,T3; T3,T5; T1,T5) d'une combinaison de valves (T1, ... ,T6) du convertisseur étant conductrices, ces temps étant produits à partir de tensions mesurées ($u_R$,$u_S$,$u_T$) de la machine.

4. Procédé suivant la revendication 1, selon lequel on détermine l'intégrale ($i_w$) du courant ($i_d$) du circuit intermédiaire au moyen de la relation

$$i_w = \frac{\sqrt{3} \cdot \hat{i}}{2 \cdot \sin(60° + \gamma)} \cos(\Phi) \text{ pour } 0° \leqq \gamma \leqq 60°$$

avec

$\cos(\Phi)$ = facteur de charge

$\hat{i}$ = amplitude du courant.

5. Procédé suivant la revendication 2 ou 3, selon lequel, lorsque l'on connaît la position angulaire ($\gamma$) du vecteur spatial de tension tournant ($\underline{u}*$) et en tenant compte des secteurs (1,...,6), on calcule une courbe continue ($i_R$ ou $i_S$) du courant de phase de la machine à champ tournant (10) à partir de l'intégrale ($i_p$ ou $i_m$) du courant ($i_d$) du circuit intermédiaire.

6. Dispositif pour la mise en oeuvre du procédé suivant la revendication 1, comportant une résistance shunt (14) dans le rail moins (16) du circuit intermédiaire (6) d'un convertisseur (2), constitué d'un redresseur non commandé (4) et d'un onduleur à impulsions (8), et dans lequel un courant ($i_d$) du circuit intermédiaire, qui est mesuré au moyen de la résistance shunt (14), est envoyé à un circuit d'échantillonnage et de blocage (18), un signal de déclenchement ($T_w$), qui est produit au moyen d'un dispositif (20) servant à produire des signaux de déclenchement ($T_w$, $T_p$, $T_m$), étant appliqué à une première entrée de déclenchement (22), le dispositif (20) formant des signaux de déclenchement ($T_w$, $T_p$, $T_m$) à partir de tensions mesurées ($u_R$, $u_S$, $u_T$) de la machine, la sortie de ce circuit (18) d'échantillonnage et de blocage étant reliée à un circuit (32) de calcul et une position angulaire ($\gamma$) d'un vecteur ($\underline{u}*$) spatial de tension tournant étant appliquée à une entrée de fréquence de ce circuit (32) de calcul.

7. Dispositif pour la mise en oeuvre du procédé suivant la revendication 2, comportant une résistance (14) shunt située dans le rail moins (16) du circuit intermédiaire (6) d'un convertisseur (2), constitué d'un redresseur non commandé (4) et d'un onduleur à impulsions (8), et dans lequel un courant ($i_d$) du circuit intermédiaire, mesuré au moyen de la résistance shunt (14), est envoyé à un circuit d'échantillonnage et de blocage (18), un signal de déclenchement ($T_p$) produit au moyen d'un dispositif (20) servant à produire des signaux de déclenchement ($T_w$, $T_p$, $T_m$) étant appliqué à une seconde entrée de déclenchement (24), et le dispositif (20) formant des signaux de déclenchement ($T_w$, $T_p$, $T_m$) à partir de tensions mesurées ($u_R$, $u_S$, $u_T$) de la machine.

8. Dispositif pour la mise en oeuvre du procédé suivant la revendication 3 comportant une résistance shunt (14) située dans le rail moins (16) du circuit intermédiaire (6) d'un convertisseur (2), constitué d'un redresseur non commandé (4) et d'un onduleur à impulsions (8), et dans lequel un courant ($i_d$) du circuit intermédiaire, mesuré au moyen de la résistance shunt (14), est envoyé à un circuit d'échantillonnage et de blocage (18), un signal de déclenchement ($T_m$) produit au moyen d'un dispositif (20) servant à produire des signaux de déclenchement ($T_w$, $T_p$, $T_m$) étant appliqué à une troisième entrée de déclenchement (26), et le dispositif (20) formant des signaux de déclenchement ($T_w$, $T_p$, $T_m$) à partir de tensions mesurées ($u_R$, $u_S$, $u_T$) de la machine.

9. Dispositif suivant la revendication 7 ou 8, dans lequel une sortie du circuit d'échantillonnage et de blocage (18), sur laquelle apparaît une courbe positive ou négative de courant ($i_p$ ou $i_m$), est reliée à un circuit de calcul (32), qui caractérise la position angulaire (g) du vecteur spatial de tension tournant ($\underline{u}*$).

FIG 1

FIG 2

| Spannungszeiger | Schalterstellung | Phasenstrom im Zwischenkreis |
|---|---|---|
| $\underline{u}_1$ | 1 0 0 | $i_R$ |
| $\underline{u}_2$ | 1 1 0 | $-i_T$ |
| $\underline{u}_3$ | 0 1 0 | $i_S$ |
| $\underline{u}_4$ | 0 1 1 | $-i_R$ |
| $\underline{u}_5$ | 0 0 1 | $i_T$ |
| $\underline{u}_6$ | 1 0 1 | $-i_S$ |

FIG 3

| Sektor 1 | Sektor 2 | Sektor 3 | Sektor 4 | Sektor 5 | Sektor 6 |
|---|---|---|---|---|---|
| $i_R$ | $i_S$ | | $i_T$ | | $i_R$ |
| $-i_T$ | | $-i_R$ | | $-i_S$ | |

## FIG 4

FIG 5

FIG 6

FIG 7

FIG 8

FIG 9

FIG 10

FIG 11

FIG 12

FIG 13

FIG 14

FIG 15

FIG 16